Europäisches Patentamt

(19) European Patent Office  (11) Publication number: **0 033 330**

Office européen des brevets  **B1**

(12) **EUROPEAN PATENT SPECIFICATION**

(45) Date of publication of patent specification: **05.12.84**  (51) Int. Cl.³: **B 60 R 21/10, A 62 B 35/00**

(21) Application number: **80901531.6**

(22) Date of filing: **29.07.80**

(86) International application number:
**PCT/NL80/00025**

(87) International publication number:
**WO 81/00383 19.02.81 Gazette 81/05**

(54) **LOCKING DEVICE FOR A SAFETY BELT.**

| | |
|---|---|
| (30) Priority: **02.08.79 NL 7905948** | (73) Proprietor: **LASSCHE, Jakob**<br>**Wiesenwegle 45**<br>**D-7230 Schramberg (DE)** |
| (43) Date of publication of application:<br>**12.08.81 Bulletin 81/32** | (72) Inventor: **LASSCHE, Jakob**<br>**Wiesenwegle 45**<br>**D-7230 Schramberg (DE)** |
| (45) Publication of the grant of the patent:<br>**05.12.84 Bulletin 84/49** | |
| (84) Designated Contracting States:<br>**DE FR GB NL SE** | (74) Representative: **Hoijtink, Reinoud et al**<br>**OCTROOIBUREAU ARNOLD & SIEDSMA 1,**<br>**Sweelinckplein**<br>**NL-2517 GK Den Haag (NL)** |
| (56) References cited:<br>**FR-A-2 369 949**<br>**US-A-4 162 715** | |

Courier Press, Leamington Spa, England.

# Description

The invention relates to a locking device for a safety belt comprising a housing, a spring loaded lock bolt mounted for movement in said housing, a belt holding key adapted to be inserted into the housing and having at least one recess fit to receive said lock bolt, an unlocking mechanism, of which an output member, after having been energized or actuated, so engages a control member of the lock bolt, as to move said bolt out of the recess against the spring force, and a blocking mechanism for said output element.

A locking device of this kind has been disclosed in NL—A—72.12304. In this known device the key, when locked by the lock bolt, has to be unlocked by a loaded unlocking mechanism with time lag device through a compression spring which operates as the mentioned output element and it is blocked in its locked condition by the friction set up between said bolt and the key by the tensile force exerted on the key by the safety belt, so that, not before said force and said friction depending thereupon have become sufficiently weak to allow said compression spring to overcome said lessened friction, the deblocking is realized and the key is unlocked. Since, however, this friction not only depends upon the mentioned tensile force but also upon the conditions of the contacting surfaces of the lock bolt and the belt holding key and upon the presence of foreign substances, if any, on said surfaces the blocking force to be overcome for unlocking the key can vary within a wide range, that means is not reproducible.

The invention has for its object to provide a locking device of the type referred to, in which the blocking is independent of frictional forces set up in the device by sufficiently strong tensile forces exerted on the belt. This object is achieved, in that the blocking mechanism comprises a fastening element mounted in said housing for movement against spring force between a rest position and a displaced position and meant for the connection of the housing with the chassis of a vehicle or an aeroplane and blocking means so associated with said fastening element and so acting on said output element, as to ensure that, when the fastening element is in its rest position, the output element is free to be moved but, when the fastening element is in its displaced position under tensile force exerted by the safety belt, movement of said output element is blocked.

It is observed that the unlocking mechanisms mentioned hereabove in connection with the prior art and the present invention are not the unlocking push buttons provided in the housings and adapted to be operated under all circumstances and at any time, but manually operable and/or automatically operating programmed unlocking mechanisms which only come into action after, for instance, forces derived from the tensile force exerted by the safety belt have been reduced to a certain value and/or a certain time has elapsed or other physical quantities, such as acceleration and deceleration forces, have attained given values. However, the present invention avoids the dependency of the result of the action of the programmed additional unlocking mechanism of frictional forces set up in the locking device, since the magnitude of such forces is not predictable.

In the blocking device according to the invention the movement of the output element is blocked after the fastening has been displaced over a given distance which is defined by the tensile force exerted on the belt holding key. By a suitable choice of the spring load of the fastening element the limit value of the effort, at which blocking occurs, can be adjusted.

In a suitable embodiment the blocking means associated with the fastening element include a face of said element, said face being inclined to the direction of movement of the fastening element, and a spring loaded lever, of which one part is provided with a projection bearing on said face of the fastening element and the other part has a protuberance which is kept out of the path of the protuberance, when the fastening element is in its rest position, but extends into said path, when the fastening element is in its displaced position. These blocking means are of simple construction, they can be accommodated in a small space and they operate very reliably. It is advantageous to arrange the lever of the blocking means rotatably about a shaft extending transversely of the direction of movement of the fastening element.

The invention will be elucidated with the aid of the accompanying drawing, in which:

Fig. 1 is an axial sectional view of the locking device constructed in accordance with the invention in the state, in which a tensile force is exerted on the belt holding key,

Fig. 2 shows the locking device illustrated in Fig. 1 in the state, in which no tensile force is exerted on the key and the unlocking mechanism is in action, and

Fig. 3 is a detail of a variant of the locking device shown in Figs. 1 and 2.

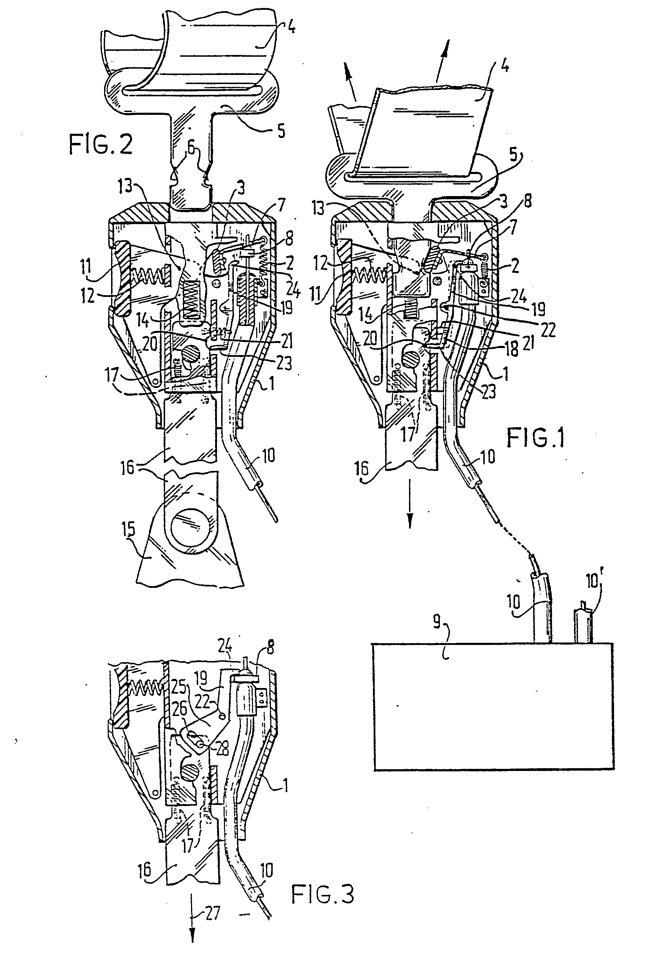

The locking device shown in Figs. 1 and 2 comprises a housing 1, a lock bolt 3 mounted for movement in said housing and loaded by a spring 2 and a key 5 connected to a safety belt 4 and having on the narrow sides thereof recesses 6 adapted to receive the lock bolt 3. This bolt is fastened to a control-arm 7 adapted to be engaged by a movable output-element 8 operated by a diagrammatically indicated unlocking mechanism 9. This mechanism may be operated manually and/or automatically and may include for that purpose a push button and/or comprise an automatically operating mechanism or an electronic unit, say a mechanism or an electronic unit responding on deceleration forces. The output element 8 is coupled with the unlocking mechanism 9 by a bowden-cable 10.

The locking device itself is provided with a push-button 11 loaded by a compression spring 12 and having a projection 13 by means of which the lock bolt 3 can be forced out of the recess 6 in order to clear the key 5 from the locking device and to enable the key to be removed out of the housing. When the key 5 is inserted into the housing 1, the lock bolt 3 is pushed aside until it snaps into the recess 6 under the action of the spring 2. When the key 5 is inserted into the housing 1, a compression spring 14 is compressed.

The housing 1 is fastened to the chassis 15 of a vehicle by means of a fastening element 16 which is mounted for axial sliding in the housing and loaded by tensile springs 17. When a tensile force is exerted by the belt 4 on the housing, the fastening element 16 is pulled out of the housing to an extent defined by the then stretched springs 17 (Fig. 1). The fastening element 16 is associated with blocking means which have the purpose to block the movement of the output element 8. These blocking means include a recess 20 provided in a side of the fastening element 16 and having a face which is inclined to the direction of movement of the fastening element and a lever 18, 19 loaded by a spring 21 and mounted in the housing for rotation about a shaft 22 which extends transversely of the direction of movement of the fastening element. The arm 18 of the lever has a projection 23 which bears on the recessed side of the fastening element 16 and is adapted to enter under the action of the tensile spring 21, the recess 20. The arm 19 of the lever is provided with a protuberance 24 which is moved into the path of the output element 8 to block its movement, as soon as a sufficiently strong tensile force is exerted on the belt 4 and thereby the fastening element 16 has been pulled out of the housing 1 to such an extent that the recess 20 is moved in front of the projection 23 of lever 18, 19 so that said projection is pulled into said recess by the spring 21. In this state of the lever 18, 19 the output element 8 is prevented by the blocking protuberance 24 of the lever arm 19 from being pushed against the control arm 7 of the lock bolt, so that the belt holding key 5 can not be released from the housing by means of the unlocking mechanism 9.

It is observed that the unlocking mechanism 9 may be used for unlocking a plurality of individual locking devices, for which purpose other bowden cables 10', etc. may be connected with the unlocking mechanism.

The modified embodiment of the locking device shown in Fig. 3 has also a fastening element 16 mounted for sliding against tensile springs 17 in the housing 1. Also the output element 8 and the lever arm 19 with its protuberance 24 are constructed in the manner shown in Figs. 1 and 2. However, the other lever arm 25 is constructed in a different way. It has an elongated hole 26 inclined to the direction of movement of the fastening element 16 which is indicated by the arrow 27. A pin 28 provided on the fastening element 16 extends in said hole 26, so that by moving the fastening element 16 in respect of the housing 1 the lever 19, 25 is swung about its pivot 22. The arrangement is again such, as to ensure that, should the fastening element 16 be pulled out of the housing 1 to a given extent, the protuberance 24 is swung into the path of the output element 8 for blocking same and, when there are no tensile stresses in the fastening element 16, the protuberance 24 is kept out of the path of the output element, so that the latter can be operated by the unlocking device 9.

**Claims**

1. A locking device for a safety belt (4) comprising a housing (1), a spring (2) loaded lock bolt (3) mounted for movement in said housing (1), a belt (4) holding key (5) adapted to be inserted into the housing (1) and having at least one recess (6) fit to receive said lock bolt (3), an unlocking mechanism (9), of which an output element (8), after having been energized or actuated, so engages a control member (7) of the lock bolt (3), as to move said bolt out of the recess (6) against the spring (2) force, and a blocking mechanism for said output element (8), characterized in that the blocking mechanism comprises a fastening element (16) mounted in said housing (1) for movement against spring (17) force between a rest position and a displaced position and meant for the connection of the housing (1) with the chassis of a vehicle or an aeroplane and blocking means (20; 18, 19, 23, 24; 22; 21 or 25, 26; 28; 19, 24; 22) so associated with said fastening element (16) and so acting on said output element (8), as to ensure that, when the fastening element (16) is in its rest position, the output element (8) is free to be moved but, when the fastening element (16) is in its displaced position under tensile force exerted by the safety belt (4), movement of said output element (8) is blocked.

2. A locking device as claimed in claim 1, characterized in that the blocking means associated with the fastening element (16) include a face (20) of said element (16), said face being inclined to the direction of movement of the fastening element (16), and a spring (21) loaded lever (18, 19), of which one part (18) is provided with a projection (23) bearing on said face (20) of the fastening element (16) and the other part (19) has a protuberance (24) which is kept out of the path of the output element (8), when the fastening element (16) is in its rest position (Fig. 2) but extends into said path, when the fastening element (16) is in its displaced position (Fig. 1).

3. A locking device as claimed in claim 2, characterized in that the lever (18, 19) is rotatable about a shaft (22) extending transversely of the direction of movement of the fastening element (16).

## Patentansprüche

1. Verschlußvorrichtung für einen Sicherheitsgurt (4), bestehend aus einem Gehäuse (1), einem von einer Feder (2) beaufschlagten Schließbolzen (3), der in dem Gehäuse (1) bewegbar angebracht ist, einen den Sicherheitsgurt (4) haltenden Haltelappen (5), der in das Gehäuse (1) einführbar ist und wenigstens eine Ausnehmung (6) aufweist, welche zufolge ihrer Ausbildung den Schließbolzen (3) aufzunehmen vermag, ferner aus einem Entriegelungsmechanismus (9), von welchem ein Freigabeelement (8) nach Unterstromsetzen oder sonstiger Betätigung auf ein Steuerglied (7) zum Schließbolzen (3) einwirkt, um den Schließbolzen gegen die Kraft einer Feder (2) aus der Ausnehmung (6) herauszubewegen, schließlich aus einem Sperrmechanismus zum Freigabeelement (8), dadurch gekennzeichnet, daß der Sperrmechanismus ein in dem Gehäuse (1) angebrachtes Halteelement (16) aufweist, um eine Bewegung gegen die Kraft einer Feder (17) zwischen einer Ruhestellung und einer versetzten Stellung zu ermöglichen, daß eine Einrichtung für die Verbindung des Gehäuses (1) mit dem Rahmen eines Fahrzeuges oder eines Flugzeuges vorgesehen ist und daß dem Halteelement (16) eine Sperreinrichtung (20; 18, 19, 23, 24; 22; 21 oder 25, 26; 28; 19, 24; 22) zugeordnet ist, welche durch Einwirkung auf das Freigabeelement (8) sicherstellt, daß, wenn das Halteelement (16) in seiner Ruhestellung sich befindet, das Freigabeelement (8) zum Bewegtwerden freigegeben ist, daß aber, wenn das Halteelement (16) in seiner versetzten Stellung sich befindet unter vom Sicherheitsgurt (4) ausgeübter Zugkraft, eine Bewegung des Freigabeelementes (8) gesperrt ist.

2. Verschlußvorrichtung nach Anspruch 1, dadurch gekennzeichnet, daß die dem Halteelement (16) zugeordnete Sperreinrichtung eine Anlegefläche (20) am Halteelement (16) beinhaltet, welche Anlegefläche zur Richtung der Bewegung des Halteelementes (16) geneigt ist, daß auch ein von einer Feder (21) beaufschlagter Hebel (18, 19) eingebaut ist, von welchem ein Teil (18) mit einem Vorsprung (23) versehen ist, der an die Anlegefläche (20) des Halteelementes (16) anlegbar ist, und von welchem das andere Teil (19) eine Auskragung (24) hat, die außerhalb der Bahn des Freigabeelementes (8) gehalten ist, wenn das Halteelement (16) in seiner Ruhestellung (Fig. 2) sich befindet, hingegen in diese Bahn ragt, wenn das Halteelement (16) in seiner versetzten Stellung (Fig. 1) ist.

3. Verschlußeinrichtung nach Anspruch 2, dadurch gekennzeichnet, daß der Hebel (18, 19) um einen Zapfen (22) drehbar ist, der quer zur Bewegungsrichtung des Halteelementes (16) sich erstreckt.

## Revendications

1. Un dispositif de verrouillage pour une ceinture de sécurité (4) qui comporte un boîtier (1), un pêne de retenue (3) chargé par un ressort (2), monté mobile dans ledit boîtier (1), une patte d'attache (5) de la ceinture (4) agencée de manière à pouvoir être introduite dans le boîtier (1) et comportant au moins un évidement (6) adapté pour recevoir ledit pêne de retenue (3), un mécanisme de déverrouillage (9) dont un organe de sortie (8), après avoir été excité ou actionné, vient en appui contre un organe de commande (7) du pêne de retenue (3) de façon à déplacer ledit pêne hors de l'évidement (6) à l'encontre de la force du ressort (2) et un mécanisme de blocage pour ledit élément de sortie (8), caractérisé en ce que le mécanisme de blocage comprend un élément de fixation (16) monté dans ledit boîtier (1) de façon à pouvoir se déplacer à l'encontre de la force d'un ressort (17) entre une position de repos et une position déplacée et servant à l'assemblage du boîtier (1) au châssis d'un véhicule ou d'un aéroplane et des moyens de blocage (20; 18, 19, 23, 24; 22; 21 ou 25, 26; 28; 19, 24; 22) associés de telle sorte à l'élément de fixation (16) et agissant de telle sorte sur l'élément de sortie (8) qu'ils assurent que, lorsque l'élément de fixation (16) est dans sa position de repos, l'élément de sortie (8) peut être librement déplacé mais que, lorsque l'élément de fixation (16) est dans sa position déplacée sous l'action de la force de traction exercée par la ceinture de sécurité (4), le déplacement dudit élément de sortie (8) est empêché.

2. Un dispositif de verrouillage tel que revendiqué dans la revendication 1, caractérisé en ce que les moyens de blocage associés à l'élément de fixation (16) comprennent une face (20) dudit élément (16), ladite face étant inclinée sur la direction de déplacement de l'élément de fixation (16) et un levier (18, 19) chargé par un ressort (21) dont une partie (18) est munie d'une saillie (23) en appui contre ladite face (20) de l'élément de fixation (16) et dont l'autre partie (19) comporte une protubérance (24) qui est maintenue hors du trajet de l'élément de sortie (8) lorsque l'élément de fixation (16) est dans sa position de repos (Fig. 2) mais s'étend dans ledit trajet lorsque l'élément de fixation (16) est dans sa position déplacée (Fig. 1).

3. Un dispositif de verrouillage tel que revendiqué dans la revendication 2, caractérisé en ce que le levier (18, 19) est monté à rotation autour d'un axe (22) s'étendant transversalement à la direction de déplacement de l'élément de fixation (16).

FIG.2

FIG.1

FIG.3